# EUROPÄISCHE PATENTSCHRIFT

(11) **EP 3 829 483 B1**
(45) Veröffentlichungstag und Bekanntmachung des Hinweises auf die Patenterteilung: **07.09.2022**
(21) Anmeldenummer: 19749687.0
(22) Anmeldetag: 31.07.2019
(51) Int. Cl.: A61C 13/277, A61C 13/265, A61C 5/77

(54) **VORRICHTUNG ZUR BEFESTIGUNG UND/ODER ZUR UNTERSTÜTZUNG DER BEFESTIGUNG VON HERAUSNEHMBAREM ZAHNERSATZ AN FESTSITZENDEM ZAHNERSATZ**
DEVICE FOR FASTENING AND/OR FOR ASSISTING FASTENING OF REMOVABLE TOOTH REPLACEMENT TO FIXED TOOTH REPLACEMENT
DISPOSITIF POUR FIXER ET/OU POUR SOUTENIR LA FIXATION D'UNE PROTHÈSE DENTAIRE AMOVIBLE SUR UNE PROTHÈSE DENTAIRE FIXE

(30) Priorität: 01.08.2018 DE 102018118637
(43) Veröffentlichungstag der Anmeldung: 09.06.2021
(73) Patentinhaber: Si-tec GmbH Dental-Spezialartikel, 58313 Herdecke (DE)
(72) Erfinder: KRAHL, Bernd, 58093 Hagen (DE)
(74) Vertreter: dompatent von Kreisler Selting Werner - Partnerschaft von Patent- und Rechtsanwälten mbB
(86) Internationale Anmeldenummer: PCT/EP2019/070636
(87) Internationale Veröffentlichungsnummer: WO 2020/025676

(56) Entgegenhaltungen:
- DE-A1- 10 011 968
- DE-A1- 10 051 520
- DE-U1- 29 919 348

## Beschreibung

Die Erfindung betrifft eine Zahnersatzvorrichtung zur Befestigung und/oder zur Unterstützung der Befestigung des herausnehmbaren Zahnersatzes der Zahnersatzvorrichtung an deren festsitzendem Zahnersatz.

Dental-Attachments für derartige Zahnersatzvorrichtung sind in vielfältiger Ausgestaltung bekannt. Beispiele für derartige bekannte Dental-Attachments sind in DE-U-89 09 755 und DE-C-198 58 195 beschrieben.

Aus EP-A-0 504 665 ist ein auswechselbares Friktionselement für die Zahnprothetik bekannt, bei dem das stiftartige Friktionselement mit aufgeweitetem Kopf in eine Bohrung eines herausnehmbaren Zahnersatzes eingesetzt wird. Der pilzartige Kopf steht zur Innenseite des herausnehmbaren Zahnersatzes über diesem über. Auf der Außenseite ist mit dem stiftartigen Friktionselement eine Kappe rastend verbunden, die das Friktionselement unter Spannung in der Bohrung des herausnehmbaren Zahnersatzes fixiert.

Aus DE-A-100 51 520 ist eine Vorrichtung zur Befestigung und/oder zur Unterstützung der Befestigung von herausnehmbarem Zahnersatz an festsitzendem Zahnersatz bekannt, die versehen ist mit einem Aufnahmeteil zur Fixierung an dem herausnehmbaren Zahnersatz und einem Halteteil, das in das Aufnahmeteil einsetzbar ist und mittels dessen der herausnehmbare Zahnersatz an dem festsitzenden Zahnersatz befestigbar ist. Das Aufnahmeteil weist im Einbauzustand eine freiliegende Vorderseite und eine der Vorderseite abgewandte, in den herausnehmbaren Zahnersatz einsetzbare Rückseite auf. Das Aufnahmeteil weist ferner einen zur Vorderseite offenen Aufnahmeraum für die Aufnahme des Halteteils auf, während die Rückseite des Aufnahmeteils als ballige oder sphärische oder teilsphärische oder als eine teilzylindrische Fläche ausgebildet ist.

Die ganz überwiegende Zahl an bekannten Dental-Attachments werden manuell verarbeitet, da ihre Formgebungen eine Bearbeitung des Zahnersatzes durch Fräs-Automaten nicht ermöglicht. Auch lassen sich die bekannten Dental-Attachments nicht mittels manueller Fräsbearbeitungen verbauen.

Aufgabe der Erfindung ist es, eine Zahnersatzvorrichtung mit einem Dental-Attachment zu schaffen, das unter Verwendung insbesondere automatischer Frästechniken verarbeitbar ist.

Zur Lösung dieser Aufgabe wird mit der Erfindung eine Zahnersatzvorrichtung mit den Merkmalen des Anspruchs 1 vorgeschlagen. Einzelne Ausgestaltungen der Erfindung sind Gegenstand der Unteransprüche.

Die erfindungsgemäße Zahnersatzvorrichtung umfasst ein Halteteil zur frikativen und/oder retensiven Halterung von herausnehmbarem Zahnersatz an festsitzendem Zahnersatz. Das Halteteil ist im Gebrauchszustand aufgenommen in einem Aufnahmeteil, das einen Aufnahmeraum für das Halteteil aufweist. Das Aufnahmeteil weist eine im Einbauzustand freiliegende Vorderseite auf, die dem festsitzenden Zahnersatz zugewandt ist, wenn der herausnehmbare Zahnersatz am festsitzenden Zahnersatz sitzt. Zu dieser Vorderseite ist der Aufnahmeraum hin offen. Der Vorderseite abgewandt weist das Aufnahmeteil eine Rückseite auf, die ballig oder sphärisch oder teilsphärisch oder teilzylindrisch ausgebildet ist. Alternativ ist es möglich, dass die Rückseite mindestens zwei ballige oder sphärische oder teilsphärisch oder teilzylindrisch ausgebildete Teilflächen aufweist, zwischen denen eine ebene oder eine ein- oder zweidimensional gekrümmte Mittelfläche angeordnet ist.

Eine Besonderheit der Erfindung besteht darin, dass die Rückseite des Aufnahmeteils hinterschnittfreie Flächen aufweist. Eine sphärische oder teilsphärische Teilfläche der Rückseite kann dabei als Übergang zwischen einer Umfangsfläche und einer ebenen oder sphärischen Rückseitenfläche ausgebildet sein. Die Umfangsfläche kann dabei konisch verjüngend oder aber auch zylindrisch ausgeführt sein. Die Rückseite kann ferner insgesamt rotationssymmetrisch ausgebildet sein oder aber auch als Quader oder Block mit polygonaler umlaufender Fläche. Der jeweilige Übergang zwischen den beispielsweise ebenen oder auch gewölbten einzelnen Flächen kann dabei durch Rundungen erfolgen, die insoweit ballige bzw. sphärische oder auch zylindrische Flächenteile bilden. All diese Varianten und Ausgestaltungen sind Gegenstand der Erfindung und an der Rückseite des Aufnahmeteils ausgebildet. Im Falle einer im Wesentlichen quaderförmigen oder blockförmigen Rückseite des Aufnahmeteils können die einzelnen Teilflächen senkrecht oder schrägverlaufend zur Rückfläche der Rückseite angeordnet sein. Bei schrägverlaufenden Seitenteilflächen des Quaders bzw. Blocks können deren Winkel gleich oder auch unterschiedlich bzw. gruppenweise gleich und gruppenweise unterschiedlich sein.

Entscheidend bei der Erfindung ist, dass die Rückseite des Aufnahmeteils eine konvexe Form aufweist, die komplementär zu einer Form ist, die bei einer Vertiefung gegeben ist, welche in dem herausnehmbaren Zahnersatz mittels eines rotationssymmetrischen Fräswerkzeugs ausbildbar ist, das eine zylindrische, ballige und/oder sphärische Fräsfläche aufweist oder dessen Fräsfläche zylindrische, ballige und/oder sphärische Teilflächen aufweist.

Mit der erfindungsgemäß geformten Rückseite des Aufnahmeteils gelingt es nun, frästechnisch die zum Aufnahmeteil "passende" Vertiefung in den herausnehmbaren Zahnersatz einzuarbeiten. Dabei gilt es zu berücksichtigen, dass die herkömmlicherweise verwendeten rotationssymmetrischen Fräswerkzeuge zylindrische, sphärische oder ballige Fräsflächen aufweisen. Damit lässt sich die das Aufnahmeteil aufnehmende Vertiefung maschinell mittels insbesondere CNC-Fräsautomaten und mittels CAD/CAM-Ver- und Bearbeitungsverfahren herstellen.

In zweckmäßiger Ausgestaltung der Erfindung kann das Aufnahmeteil Metall oder Kunststoff aufweisen bzw. aus Metall oder Kunststoff bestehen.

In weiterer vorteilhafter Ausgestaltung der Erfindung wird das Aufnahmeteil mittels der üblichen Montagetechniken in der Vertiefung des herausnehmbaren Zahnersatzes montiert. Hierbei ist es besonders zweckmäßig, das Aufnahmeteil mittels eines Klebers in einer durch Fräsen in dem herausnehmbaren Zahnersatz ausgebildeten Vertiefung zu fixieren. Derartige Kleber, die insbesondere zwischen zwei zu verklebenden Metallteilen wirken, sind grundsätzlich bekannt. Der herausnehmbare Zahnersatz besteht zumindest hinsichtlich seines Gerüsts aus Metall. Wenn nun das Aufnahmeteil ebenfalls Metall aufweist, ist eine Montage des Aufnahmeteils in der Vertiefung durch einen Kleber möglich und auch ausreichend. Ganz grundsätzlich gilt, dass das Aufnahmeteil während des Gebrauchs keinerlei Zugkräften ausgesetzt ist. Insoweit sind also an die Fixierung des Halteteils in der Vertiefung nur geringe Anforderungen zu stellen.

Anders sieht die Situation aus, wenn das Aufnahmeteil aus Kunststoff besteht bzw. Kunststoff aufweist. Kunststoffmaterialien lassen sich nicht so ohne weiteres mittels eines Klebers an Metall befestigen. Daher ist gemäß einer Variante der Erfindung vorgesehen, dass das Aufnahmeteil mindestens eine Aussparung aufweist, die zur Rückseite des Aufnahmeteils hin offen ist. Durch die Aussparung kann sich der gut am Metall haftende Kleber mit dem Aufnahmeteil verhaken, nachdem der in der Vertiefung befindliche Kleber beim Eindrücken des Aufnahmeteils in die Vertiefung in die mindestens eine Aussparung gelangt und sich dort nach Aushärtung des Klebers eine Art Formschluss bildet. Hierbei ist es zweckmäßig, wenn die Aussparung in einer parallelen Richtung zur von der Vorderseite des Aufnahmeteils definierten Ebene offen ist. Vorzugweise werden zwei derartige Aussparungen, die jeweils insbesondere als Nuten ausgebildet sind, verwendet, wobei diese beiden Aussparungen bzw. Nuten in einander abgewandten Richtung hin offen sind, und zwar zur Seite des Aufnahmeteils.

Alternativ zum zuvor Gesagten kann bei einer Variante der Erfindung die Aussparung in einer orthogonalen Richtung zur von der Vorderseite definierten Ebene offen sein und mindestens einen Seitenhinterschnitt aufweisen. Beispielsweise ist eine derartige Aussparung zum Grund der Vertiefung im herausnehmbaren Zahnersatz hin offen. Wenn nun in diese Aussparung Kleber gelangt (und zwar in Folge des Hineindrückens des Aufnahmeteils in die Vertiefung) und die Seitenflanken der Aussparung Hinterschnitte aufweisen, so gelangt der Kleber auch in diese Hinterschnittbereiche, womit er sich nach Aushärtung sozusagen mit dem Aufnahmeteil verhakt.

In weiterer vorteilhafter Ausgestaltung der Erfindung kann vorgesehen sein, dass das Halteteil zur Befestigung und/oder zur Unterstützung der Befestigung des herausnehmbaren Zahnersatzes an dem festsitzenden Zahnersatz mittels Reibschluss und/oder mittels Formschluss vorgesehen ist. Im Falle eines Formschlusses weist das Halteteil einen Rastvorsprung zum Eintauchen in eine Rastvertiefung des festsitzenden Zahnersatzes auf.

Die frästechnische Ausarbeitung der Vertiefung im herausnehmbaren Zahnersatz für das Aufnahmeteil der erfindungsgemäßen Vorrichtung erfolgt, wie oben erwähnt, bei der Herstellung des Zahnersatzes. Noch nicht gebrauchter Zahnersatz bzw. Zahnersatz, der noch relativ neu ist, benötigt an sich noch keine Vorrichtung zur Befestigung/oder Unterstützung der Befestigung des herausnehmbaren Zahnersatzes am festsitzenden Zahnersatz.

Nichtsdestotrotz sollte man durch die frästechnische Bearbeitung, wie oben beschrieben, bereits bei der Herstellung des Zahnersatzes dafür sorgen, dass im Bedarfsfalle zu einem späteren Zeitpunkt ein Dental-Attachment gemäß Erfindung verwendet werden kann. Daher sieht eine Variante der Erfindung ein Platzhalterteil zur Aufnahme durch das Aufnahmeteil anstelle des Halteteils vor, wobei das Platzhalterteil zum im Wesentlichen Verschließen des Aufnahmeraums des Aufnahmeteils ohne Befestigungsfunktion für den herausnehmbaren Zahnersatz vorgesehen ist. Das Platzhalterteil wird also solange statt des Halteteils verwendet, bis der herausnehmbare Zahnersatz aufgrund eines gewissen Verschleißes nicht mehr ausreichend zuverlässig am festsitzenden Zahnersatz hält. In dem Fall würde man dann also das Platzhalterteil herausnehmen und durch ein Halteteil ersetzen. Das Platzhalterteil dient beispielsweise auch dazu, den Aufnahmeraum des bereits verbauten Aufnahmeteils im Wesentlichen frei von Verunreinigungen zu halten, solange das Aufnahmeteil noch nicht mit einem Halteteil bestückt ist.

Die Erfindung wird nachfolgend anhand eines Ausführungsbeispiels sowie unter Bezugnahme auf Zeichnung näher erläutert. Im Einzelnen zeigen dabei:
- Fig. 1: Eine perspektivische Ansicht von unten in ein Sekundärteil einer Überkronung eines Zahnstumpfs, an dem ein herausnehmbarer Zahnersatz fixiert ist bzw. ruht, wobei ein erfindungsgemäßes Ausführungsbeispiel der Vorrichtung in der Innenseite der Überkronungswand angeordnet ist,
- Fig. 2: eine perspektivische Ansicht auf ein Ausführungsbeispiel der erfindungsgemäßen Vorrichtung, wie es in Fig. 1 verbaut ist,
- Fign. 3 bis 5: verschiedene Ansichten des Ausführungsbeispiels der Vorrichtung, wobei in den Fign. 3 und 4 das Halteteil nicht gezeigt ist, aber in Fig. 5,
- Fign. 6 bis 10: schematische Darstellungen des Ablaufs eines Fräsvorgangs zum Ausfräsen einer Vertiefung an der Innenseite einer Überkronungswand als Vorbereitung für das Einsetzen der erfindungsgemäßen Vorrichtung und
- Fign. 11 und 12: ein alternatives Ausführungsbeispiel (schematisch dargestellt) für den Fräsvorgang.

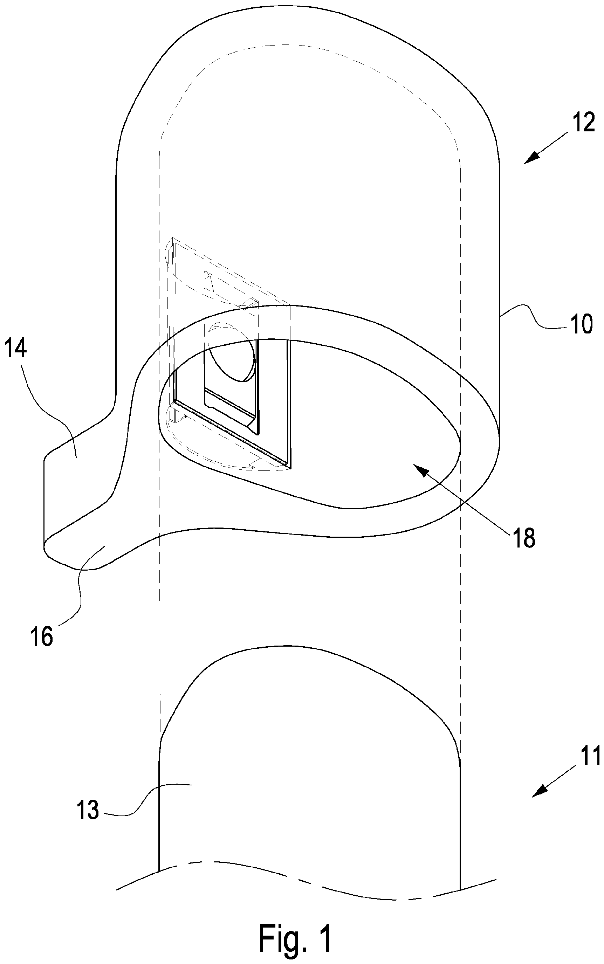

In Fig. 1 ist ein Sekundärteil 10 eines herausnehmbaren Zahnersatzes 12 gezeigt, der auf festsitzenden Zahnersatz 11 in Form eines Primärteils aufsetzbar und von diesem abnehmbar ist, wobei das Sekundärteil 10 als Sekundärkrone ausgebildet ist, an die sich, wie bei 14 angedeutet, ein Gerüst des herausnehmbaren Zahnersatzes 12 anschließen kann. In die Wand 16 des Sekundärteils 10 ist innen eine erfindungsgemäße Vorrichtung 18 gemäß einem Ausführungsbeispiel eingesetzt.

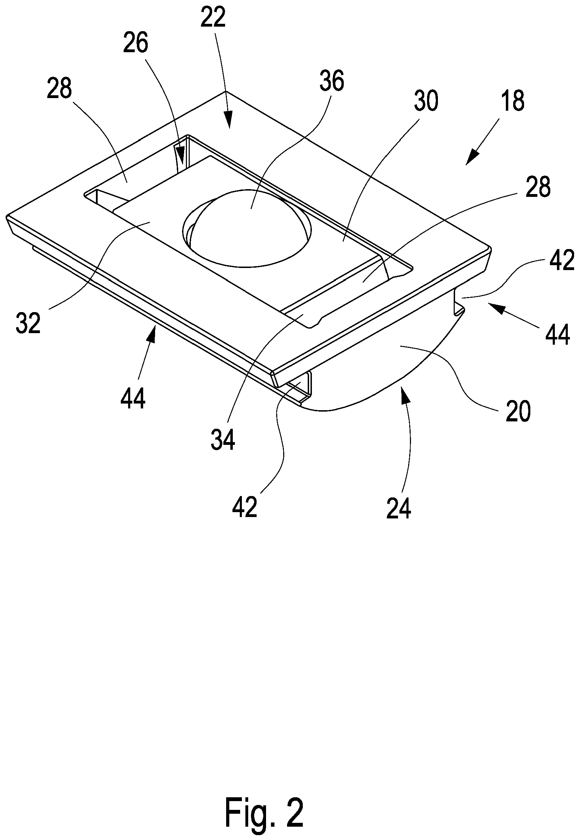

Eine perspektivische Darstellung der Vorrichtung 18 zeigt Fig. 2. Die Vorrichtung 18 umfasst ein Aufnahmeteil 20 aus Metall oder Kunststoff, das eine im Einbauzustand nach innen in das Sekundärteil 10 weisenden, freiliegende Vorderseite 22 und eine dieser abgewandte Rückseite 24 aufweist. Zur Vorderseite 22 hin offen befindet sich im Aufnahmeteil 20 ein Aufnahmeraum 26, der in diesem Ausführungsbeispiel rechteckig bzw. quaderförmig ausgebildet ist. An zwei Stirnseiten weist der Aufnahmeraum 26 Vorwölbungen 28 auf. In den Aufnahmeraum 26 eingesetzt ist ein Halteteil 30, das U-förmig ausgebildet ist und einen Hauptabschnitt 32 sowie zwei von diesem abstehende Schenkel 34 aufweist. Der Hauptabschnitt 32 ist mit einem in diesem Ausführungsbeispiel sphärischen Rastvorsprung 36 versehen. Der Rastvorsprung 36 kann einteilig mit dem beispielsweise aus Kunststoff bestehenden Halteteil 30 ausgebildet sein. Alternativ ist es auch möglich, dass der Rastvorsprung 36 als eine Art Rastkugel aus Metall ausgebildet ist, die mechanisch mit dem aus Kunststoff bestehenden Halteteil 30 verbunden ist.

Die äußere Gestalt des Halteteils 30 und damit auch die Form des Aufnahmeraums 26 können alternativ auch so ausgebildet sein, wie es beispielsweise in DE-U-296 154 70 oder DE-U-298 224 52 gezeigt ist.

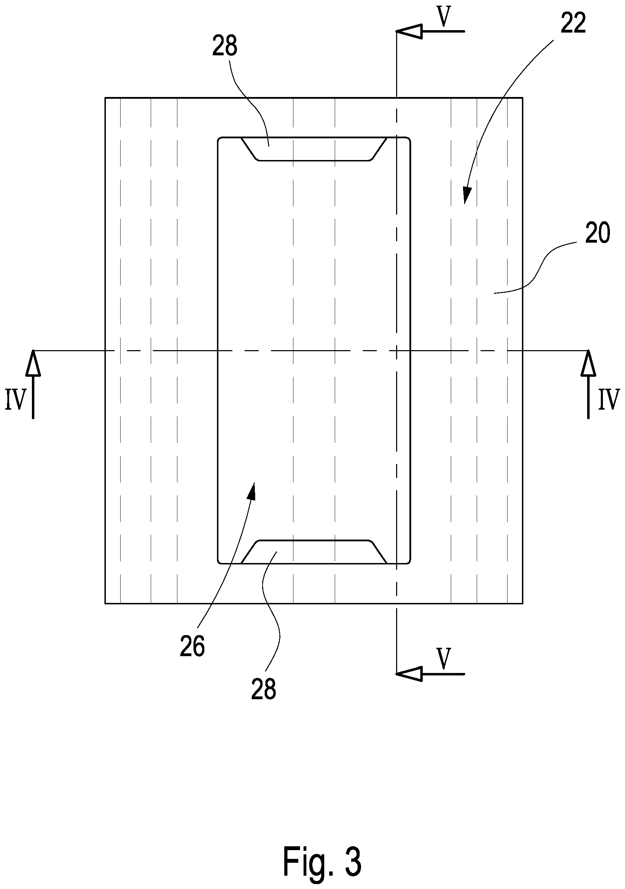

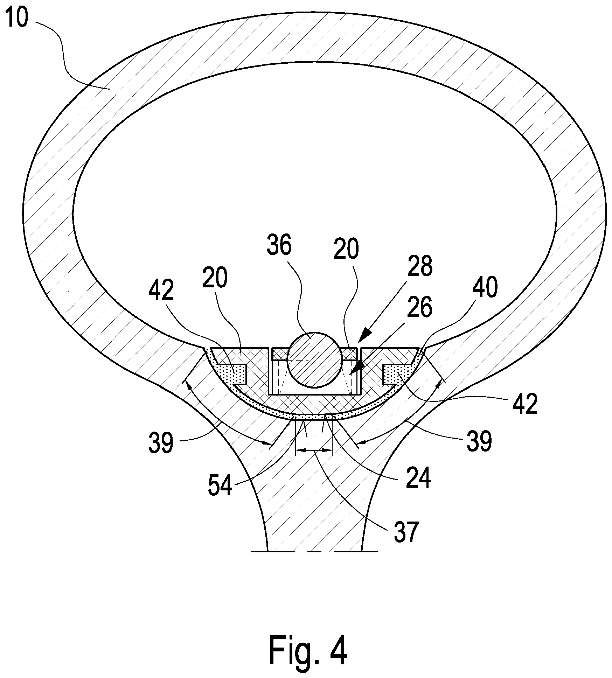

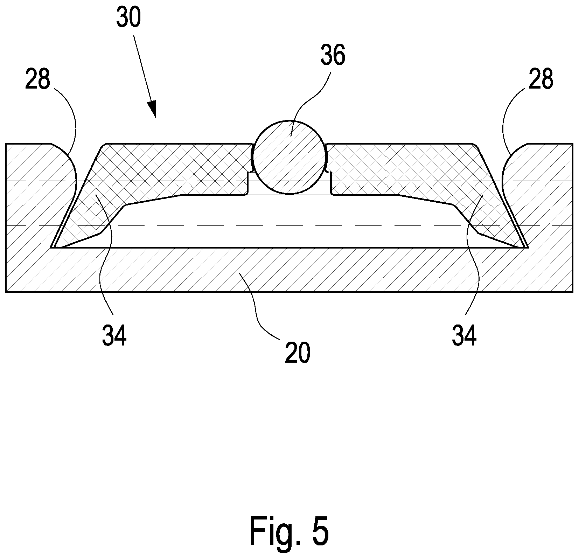

In den Fign. 3 bis 5 sind verschiedene Ansichten der Vorrichtung 18 gezeigt. So ist in Fig. 3 beispielsweise eine Draufsicht auf die Vorderseite des Aufnahmeteils 20 gezeigt, wobei das Halteteil 30 nicht eingesetzt ist. Fig. 4 zeigt einen Schnitt entlang der Linie IV-IV der Fig. 3, und zwar ebenfalls ohne eingesetztes Halteteil 30. Fig. 5 zeigt eine Ansicht von der Seite in Richtung des Pfeils V der Fig. 3 mit im Aufnahmeteil 20 eingesetztem Halteteil 30.

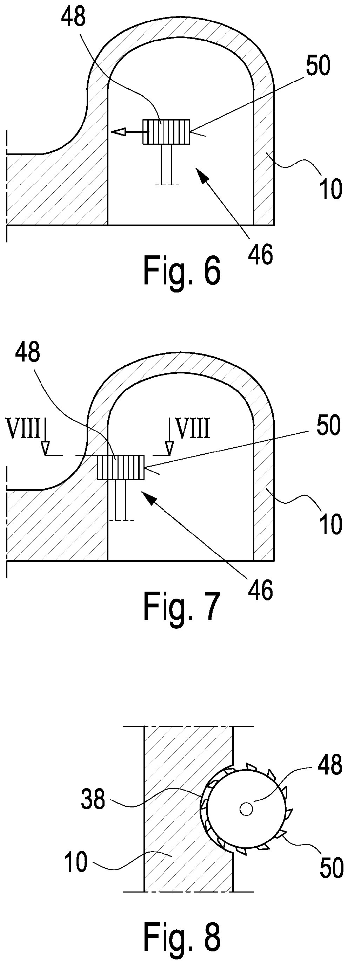

In Fig. 4 ist überdies gezeigt, wie das Aufnahmeteil 20 in eine Vertiefung 38 im Sekundärteil 10 eingesetzt ist. Zu diesem Zweck wird zunächst, worauf später noch eingegangen wird, frästechnisch die Vertiefung 38 in die Innenseite der Wand 16 des Sekundärteils 10 eingearbeitet. Das Aufnahmeteil 20 wird anschließend mit seiner Rückseite 24 in die Vertiefung 38 eingesetzt. Die Rückseite 24 kann rund (konvex) ausgeführt sein, und zwar mit konstantem Radius und erstreckt sich über einen Teil eines Kreisbogens. Alternativ ist es möglich, dass die Rückseite 24 zwei zylindrische also kreisbogenförmige (zylindrische) Abschnitte 37 aufweist, zwischen denen sich ein beispielsweise gradliniger Mittelabschnitt 39 (jeweils in Ansicht gemäß Fig. 4 betrachtet) befindet. Auf die frästechnische Herstellung der Vertiefung 38 wird später noch anhand der Fign. 6 bis 12 eingegangen.

Zur Fixierung des Aufnahmeteils 20 in der Vertiefung 38 dient ein Kleber 40. Zu erkennen ist, dass der Kleber 40 sich zwischen der Rückseite 24 des Aufnahmeteils 20 und der Vertiefung 38 befindet. In die Rückseite 24 eingearbeitet sind zwei seitlich ausgerichtete Aussparungen 42, die in diesem Ausführungsbeispiel als Nuten 44 ausgebildet sind (siehe auch Fig. 2). In diesen Nuten 44 dringt nun Kleber 40 ein, der somit nach seiner Aushärtung für eine mechanische Verzahnung mit dem Aufnahmeteil 20 sorgt. Auf diese Weise ist es möglich, einen gut an Metall (das Sekundärteil 10 bzw. Gerüst 14 des herausnehmbaren Zahnersatzes besteht aus Metall) haftenden Kleber auch dann zu verwenden, wenn das Aufnahmeteil 20 beispielsweise aus Kunststoff besteht.

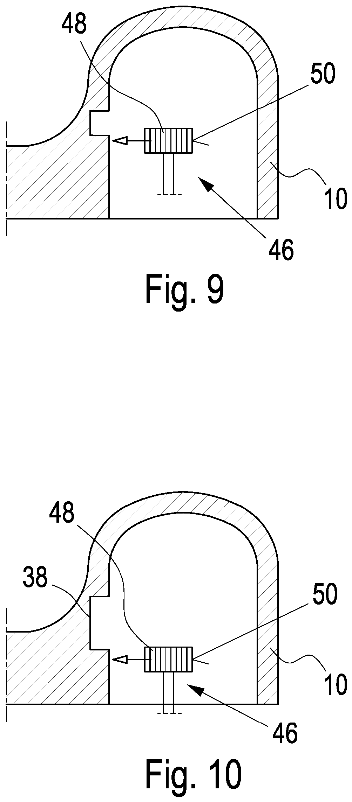

In den Fign. 6 bis 10 sind schematisch die einzelnen Prozessschritte zur frästechnischen Herstellung der Vertiefung 38 im Sekundärteil 10 gezeigt. Dabei wird davon ausgegangen, dass das Fräswerkzeug 46 einen Fräskopf 48 mit einer zylindrischen Fräsfläche 50 aufweist. Die Fräsfläche 50 kann auch ballig oder sphärisch geformt sein. Die axiale Erstreckung der zylindrischen Fräsfläche 50 ist dabei kleiner als die Höhe der Vertiefung 38. Nachdem das Fräswerkzeug 46 von innen in das Sekundärteil 10 eingebracht worden ist, wird mittels des Fräswerkzeugs 46 ein erster Teil der Vertiefung 38 hergestellt (siehe Fig. 7). Anhand von Fig. 8 ist die Form der Vertiefung 38 zu erkennen. Das Fräswerkzeug 46 wird anschließend aus dem Teil der Vertiefung 38 herausbewegt, um dann axial versetzt zu werden (siehe Fig. 9). Nachdem das Fräswerkzeug 46 dann den nächsten Teilabschnitt der Vertiefung 38 frästechnisch hergestellt hat, wird es in diesem Ausführungsbeispiel wieder heraus bewegt und wieder axial versetzt ein drittes Mal zum Fräsen der vollständigen Vertiefung 38 angesetzt (siehe Fig. 10).

Alternativ dazu ist es selbstverständlich möglich, dass ein Fräswerkzeug 46 verwendet wird, dessen rotationssymmetrische (in diesem Ausführungsbeispiel zylindrische) Fräsfläche 50 eine axiale Erstreckung aufweist, die gleich der Länge der herzustellenden Vertiefung 38 ist. Auch können dabei Fräswerkzeuge 46 eingesetzt werden, deren Fräsflächen 50 ballig oder sphärisch ausgebildet sind. Entsprechend ist dann die Rückseite 24 des Aufnahmeteils 20 geformt.

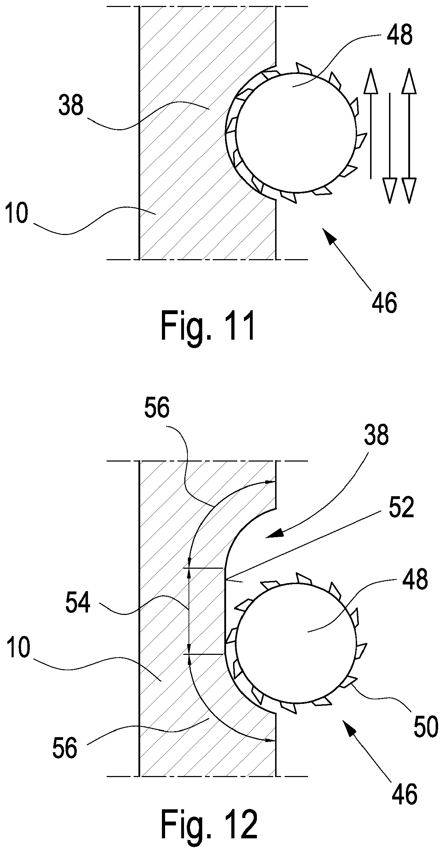

In den Fign. 11 und 12 ist schematisch angedeutet, wie durch laterale Verschiebung des in das Sekundärteil 10 eingearbeiteten Fräswerkzeugs 46 eine Vertiefung 38 hergestellt werden kann, die an ihrem Grund 52 einen ebenen Abschnitt 54 aufweist, der zwischen zwei durch die Kontur der Fräsfläche 50 des Fräswerkzeugs 46 bestimmte Rundung 56 angeordnet ist.

Dementsprechend weist dann auch die Rückseite 24 des Aufnahmeteils 20 den entsprechend planen oder eindimensional gekrümmten Mittelabschnitt 39 auf, der zwischen den beiden runden Abschnitten 37 angeordnet ist (siehe beispielsweise in Fig. 4). Der Vorteil der planen Fläche im Mittelabschnitt 39 sowohl der Rückseite 24 des Aufnahmeteils 20 als auch der Vertiefung 38 besteht darin, dass sich somit das Aufnahmeteil 20 auf einfache Art und Weise ausgerichtet in die gerundete Vertiefung 38 vorschriftsmäßig einsetzten lässt. Dies gelingt dadurch, dass bei dem Einsetzten des Aufnahmeteils 20 die beiden Abschnitte 54 und 39 aneinanderliegen und damit die Rotationsposition des Aufnahmeteils 20 in der Vertiefung 38 festgelegt ist (siehe Fig. 4).

Die Form des Fräswerkzeuges 46 und die Kontur von dessen Fräsfläche 50 ist in Abhängigkeit von der Geometrie der in den herausnehmbaren Zahnersatz 12 einzuarbeitenden Vertiefung 38 entsprechend zu wählen. Es eignen sich beispielsweise kugelförmige Fräswerkzeuge oder auch scheibenförmige Fräswerkzeuge. Auch Fräswerkzeuge 46 mit zylindrischer Fräsfläche 50 sind einsetzbar.

Abschließend sei noch darauf hingewiesen, dass zur Platzierung der erfindungsgemäßen Vorrichtung im herausnehmbaren Zahnersatz dieser nicht nur frästechnisch bearbeitet werden kann, sondern auch gießtechnisch, wie es aktuell in der Zahntechnik oftmals anzutreffen ist, wenn frikativ oder retensiv wirkende Halteelemente nachträglich oder auch bei Herstellung des Zahnersatzes eingebaut werden.

### Bezugszeichenliste

10 Sekundärteil
11 festsitzender Zahnersatz
12 herausnehmbarer Zahnersatz
13 Primärteil
14 Gerüst des herausnehmbaren Zahnersatzes
16 Wand
18 Vorrichtung
20 Aufnahmeteil
22 Vorderseite des Aufnahmeteils
24 Rückseite des Aufnahmeteils
26 Aufnahmeraum des Aufnahmeteils
28 Vorwölbungen des Aufnahmeteils
30 Halteteil
32 Hauptabschnitt des Halteteils
34 Schenkel des Halteteils
36 Rastvorsprung des Halteteils
37 zylindrischer Abschnitt der Rückseite
38 Vertiefung
39 planer Mittelabschnitt der Rückseite
40 Kleber
42 Aussparung
44 Nuten
46 Fräswerkzeug
48 Fräskopf
50 Fräsfläche
52 Grund
54 planer Abschnitt der Vertiefung
56 Rundungen der Vertiefung

## Patentansprüche

1. Zahnersatzvorrichtung mit
- einem festsitzenden Zahnersatz (11),
- einem herausnehmbaren Zahnersatz (10), der auf den festsitzenden Zahnersatz (11) aufsetzbar und von diesem abnehmbar ist, und
- einer Vorrichtung (18), die versehen ist mit
- einem Aufnahmeteil (20) zur Fixierung an dem herausnehmbaren Zahnersatz und
- einem Halteteil (30), das in das Aufnahmeteil (20) einsetzbar ist und mittels dessen der herausnehmbare Zahnersatz an dem festsitzenden Zahnersatz befestigbar ist,
- wobei das Aufnahmeteil (20) im Einbauzustand eine freiliegende Vorderseite (22) und eine der Vorderseite (22) abgewandte Rückseite (24) aufweist,
- wobei das Aufnahmeteil (20) einen zur Vorderseite (22) offenen Aufnahmeraum (26) zur Aufnahme des Halteteils (30) aufweist und
- wobei die Rückseite (24) des Aufnahmeteils (20)
- als ballige oder sphärische oder teilsphärische oder als eine teilzylindrische Fläche ausgebildet ist
oder
- zwei jeweils als ballige oder als sphärische oder teilsphärische oder als teilzylindrische Abschnitte ausgebildete Teilflächen mit einer zwischen diesen angeordneten ebenen oder ein- oder zweidimensional gekrümmten Mittelfläche aufweist,
- wobei der herausnehmbare Zahnersatz (10) eine zur Anlage am festsitzenden Zahnersatz (11) vorgesehene Wand (16) aufweist, in der eine die Wand (16) nicht vollständig durchdringende Vertiefung (38) ausgebildet ist, die eine Öffnung aufweist, welche bei auf dem festsitzenden Zahnersatz (11) aufgesetztem herausnehmbarem Zahnersatz (10) zum festsitzenden Zahnersatz (11) hin weist und durch die hindurch die Vorrichtung (18) mit der Rückseite (24) ihres Aufnahmeteils (20) einsetzbar ist.

2. Zahnersatzvorrichtung nach Anspruch 1, **dadurch gekennzeichnet, dass** das Aufnahmeteil (20) Metall oder Kunststoff aufweist und/oder dass das Halteteil (30) Kunststoff aufweist.

3. Zahnersatzvorrichtung nach Anspruch 1 oder 2, **dadurch gekennzeichnet, dass** das Aufnahmeteil (20) mittels eines Klebers (40) in einer durch Fräsen in dem herausnehmbaren Zahnersatz ausgebildeten Vertiefung (38) fixierbar ist.

4. Zahnersatzvorrichtung nach einem der Ansprüche 1 bis 3, **dadurch gekennzeichnet, dass** das Aufnahmeteil (20) mindestens eine Aussparung (42) aufweist, die zur Rückseite (24) des Aufnahmeteils (20) hin offen ist.

5. Zahnersatzvorrichtung nach Anspruch 4, **dadurch gekennzeichnet, dass** die Aussparung (42) in einer zu der von der Vorderseite (22) des Aufnahmeteils (20) definierten Ebene parallelen Richtung offen ist.

6. Zahnersatzvorrichtung nach Anspruch 4, **dadurch gekennzeichnet, dass** die Aussparung (42) in einer zu der von der Vorderseite (22) definierten Ebene orthogonalen Richtung offen ist und mindestens einen Seitenhinterschnitt aufweist.

7. Zahnersatzvorrichtung nach einem der Ansprüche 1 bis 6, **dadurch gekennzeichnet, dass** das Halteteil (30) zur Befestigung und/oder zur Unterstützung der Befestigung des herausnehmbaren Zahnersatzes (12) an dem festsitzenden Zahnersatz mittels Reibschluss und/oder mittels Formschluss vorgesehen ist.

8. Zahnersatzvorrichtung nach Anspruch 7, **dadurch gekennzeichnet, dass** im Falle eines Formschlusses das Halteteil (30) einen Rastvorsprung (36) zum Eintauchen in eine Rastvertiefung des festsitzenden Zahnersatzes aufweist.

9. Zahnersatzvorrichtung nach einer der Ansprüche 1 bis 8, **gekennzeichnet durch** ein Platzhalterteil zur Aufnahme durch das Aufnahmeteil (20) anstelle des Halteteils (30), wobei das Platzhalterteil zum im Wesentlichen Verschließen des Aufnahmeraums (26) des Aufnahmeteils (20) und ohne Befestigungsfunktion für den herausnehmbaren Zahnersatz vorgesehen ist.

## Claims

1. A denture device comprising:
- a fixed denture (11),
- a removable denture (10) adapted to be set on and removed from the fixed denture (11), and
- a device (18) provided with
- a receiving part (20) for fixing to the removable denture and
- a retaining part (30) adapted to be set into the receiving part (20) and by means of which the removable denture can be fastened to the fixed denture,
- wherein, in the installed state, the receiving part (20) has an exposed front side (22) and a rear side (24) facing away from the front side (22),
- wherein the receiving part (20) has a receiving space (26) for receiving the retaining part (30), the space being open to the front side (22), and
- wherein the rear side (24) of the receiving part (20)
- is formed as a convex or spherical or partly spherical or as a partly cylindrical surface,
or
- two partial surfaces respectively formed as convex or spherical or partly spherical or as partly cylindrical sections, said partial surfaces comprising a planar or one- or two dimensionally curved central surface located therebetween,
- wherein the removable denture (10) has a wall (16) provided for resting against the fixed denture (11), in which wall an indentation (36) is formed that does not fully penetrate the wall (16), the indentation comprising an opening which, with the removable denture (10) set on the fixed denture (11), is directed towards the fixed denture (11) and through which the device (18) can be inserted with the rear side (24) of its receiving part (20).

2. The denture device according to claim 1, **characterized in that** the receiving part (20) comprises metal or plastics and/or **in that** the retaining part (30) comprises plastics.

3. The denture device according to claim 1 or 2, **characterized in that** the receiving part (20) is adapted to be fixed in an indentation (38) formed in the removable denture by milling, using an adhesive (40).

4. The denture device according to one of claims 1 to 3, **characterized in that** the receiving part (20) comprises at least one recess (42) open to the rear (24) of the receiving space (20).

5. The denture device according to claim 4, **characterized in that** the recess (42) is open in a direction parallel to the plane defined by the front (22) of the receiving part (20).

6. The denture device according to claim 4, **characterized in that** the recess (42) is open in a direction orthogonal to the plane defined by the front (22) and comprises at least one lateral undercut.

7. The denture device according to one of claims 1 to 6, **characterized in that** for fastening and/or assisting the fastening of the removable denture (12), the retaining part (30) is provided on the fixed denture by means of frictional engagement and/or positive engagement.

8. The denture device according to claim 7, **characterized in that** in the case of a positive engagement, the retaining part (30) has a locking protrusion (36) for entering a locking recess of the fixed denture.

9. The denture device according to one of claims 1 to 8, **characterized by** a placeholder part to be received by the receiving part (20) in place of the retaining part (30), the placeholder part being provided to substantially close the receiving space (26) of the receiving part (20) and without a fastening function for the removable denture.

## Revendications

1. Dispositif de prothèse dentaire doté
- d'une prothèse dentaire fixe (11),
- d'une prothèse dentaire amovible (10), laquelle peut être placée sur la prothèse dentaire fixe (11) et peut être enlevée de celle-ci, et
- d'un dispositif (18), lequel est prévu doté
- d'une pièce de logement (20) se fixant sur la prothèse dentaire amovible et
- d'une pièce de maintien (30), laquelle est insérable dans la pièce de logement (20) et au moyen de laquelle la prothèse dentaire amovible peut être fixée à la prothèse dentaire fixe,
- dans lequel la pièce de logement (20) comporte dans l'état monté une face avant découverte (22) et une face arrière (24) se détournant de la face avant (22),
- dans lequel la pièce de logement (20) comporte un espace de logement (26) ouvert à la face avant (22) destiné à loger la pièce de maintien (30) et
- dans lequel la face arrière (24) de la pièce de logement (20)
- est réalisée comme bombée ou sphérique ou partiellement sphérique ou comme une surface partiellement cylindrique
ou
- comporte deux surfaces partielles réalisées respectivement comme bombées ou sphériques ou partiellement sphériques ou comme sections partiellement cylindriques avec une surface médiane, disposée entre celles-ci plane, ou recourbée en une ou deux dimensions,
- dans lequel la prothèse dentaire amovible (10) comporte une paroi (16), prévue pour reposer sur la prothèse dentaire fixe (11), où est réalisée une cavité (38) ne traversant pas entièrement la paroi (16), comportant une ouverture laquelle fait face à la prothèse dentaire fixe (11) lorsque la prothèse dentaire amovible (10) est placée sur la prothèse dentaire fixe (11) et à travers laquelle le dispositif (18) peut être inséré avec la face arrière (24) de sa pièce de logement (20).

2. Dispositif de prothèse dentaire selon la revendication 1, **caractérisé en ce que** la pièce de logement (20) comporte du métal ou du plastique et/ou **en ce que** la pièce de maintien (30) comporte du plastique.

3. Dispositif de prothèse dentaire selon la revendication 1 ou 2, **caractérisé en ce que** la pièce de logement (20) peut être fixée au moyen d'un adhésif (40) dans une cavité (38) réalisée par fraisage dans la prothèse dentaire amovible.

4. Dispositif de prothèse dentaire selon l'une des revendications 1 à 3, **caractérisé en ce que** la pièce de logement (20) comporte au moins un évidement (42), lequel est ouvert vers la face arrière (24) de la pièce de logement (20).

5. Dispositif de prothèse dentaire selon la revendication 4, **caractérisé en ce que** l'évidement (42) est ouvert dans une direction parallèle au plan défini par la face avant (22) de la pièce du logement (20).

6. Dispositif de prothèse dentaire selon la revendication 4, **caractérisé en ce que** l'évidement (42) est ouvert dans une direction orthogonale au plan défini par la face avant (22) et comporte au moins une contre-dépouille latérale.

7. Dispositif de prothèse dentaire selon l'une des revendications 1 à 6, **caractérisé en ce que** la pièce de maintien (30) est prévue pour fixer et/ou pour aider à la fixation de la prothèse dentaire amovible (12) sur la prothèse dentaire fixe par friction et/ou par complémentarité de formes.

8. Dispositif de prothèse dentaire selon la revendication 7, **caractérisé en ce que** dans le cas d'une complémentarité de formes la partie de maintien (30) comporte un tenon d'arrêt (36) destiné à plonger dans une cavité d'arrêt de la prothèse dentaire fixe.

9. Dispositif de prothèse dentaire selon l'une des revendications 1 à 8, **caractérisé par** une pièce bouche-trou destinée à être logée par la pièce de logement (20) à la place de la pièce de maintien (30), dans lequel la pièce bouche-trou est prévue pour sensiblement fermer l'espace de logement (26) de la pièce de logement (20) et est prévue sans fonction de fixation pour la prothèse dentaire amovible.
